(19) Europäisches Patentamt
European Patent Office
Office européen des brevets

(11) Publication number: **0 053 457**
**B1**

(12) # EUROPEAN PATENT SPECIFICATION

(45) Date of publication of patent specification: **03.04.85**

(51) Int. Cl.$^4$: **G 06 F 15/347**

(21) Application number: **81305481.4**

(22) Date of filing: **20.11.81**

(54) **Data processing apparatus.**

(30) Priority: **21.11.80 JP 164100/80**
**26.11.80 JP 166164/80**

(43) Date of publication of application:
**09.06.82 Bulletin 82/23**

(45) Publication of the grant of the patent:
**03.04.85 Bulletin 85/14**

(84) Designated Contracting States:
**DE FR GB**

(56) References cited:
**US-A-3 898 626**

**THE 6TH ANNUAL SYMPOSIUM ON COMPUTER ARCHITECTURE, April 23-25, 1979, IEEE LONG BEACH (US), R.M. OWENS et al.: "On-line algorithms for the design of pipeline architectures", pages 12-19**
**IBM TECHNICAL DISCLOSURE BULLETIN, vol. 18, no. 5, October 1975, NEW YORK (US), K.G. TAN: "Access control mechanism for shared units", pages 1522-1526**

(73) Proprietor: **FUJITSU LIMITED**
**1015, Kamikodanaka Nakahara-ku**
**Kawasaki-shi Kanagawa 211 (JP)**

(72) Inventor: **Uchida, Keiichiro**
**1871-7, Hino-cho Konan-ku**
**Yokohama-shi Kanagawa 233 (JP)**
Inventor: **Tamura, Hiroshi**
**3-1-13-101, Nijigaoka Tama-ku**
**Kawasaki-shi Kanagawa 215 (JP)**
Inventor: **Okamoto, Tetsuro**
**2-29-203, Fujinodaidanchi**
**Machida-shi Tokyo 194 (JP)**
Inventor: **Okutani, Shigeaki**
**30-1, Enokigaoka Midori-ku**
**Yokohama-shi Kanagawa 227 (JP)**

(74) Representative: **Sunderland, James Harry et al**
**HASELTINE LAKE & CO Hazlitt House 28**
**Southampton Buildings Chancery Lane**
**London WC2A 1AT (GB)**

(56) References cited:
**THE 3RD USA-JAPAN COMPUTER CONFERENCE PROCEEDINGS, October 10-12, 1978, BALTIMORE (US), K. UCHIDA et al.: "The facom 230-75 array processor system", pages 369-373**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 053 457 B1**

Courier Press, Leamington Spa, England.

**Description**

The present invention relates to data processing apparatus, in particular to data processing apparatus having a plurality of vector registers, consisting each of a plurality of elements, between a main memory unit and functional units, which apparatus is operable to transfer desired data to a vector register from the main memory unit, and to hold that data in the vector register, and to carry out various kinds of processing, such as logic operations, by sequentially accessing elements in the vector register.

In a previously proposed data processing system in which data from a main memory unit is usually buffered into a plurality of vector registers, consisting each of a plurality of elements, and operations such as logic operations are carried out by extracting data from vector registers, the vector registers are arranged in bank units, when a plurality of banks are used, and arithmetic operations are performed by sequentially addressing data elements which are continuous or successive in the same bank unit.

As a typical example of data processing apparatus employing such a system, the CRAY-1 Computer System, described in the magazine "Communications of the ACM" volume 21, Number 1, January 1978, pages 63 to 72 to which attention is directed, is generally known. However, with the existing system, when a bank storing data which is considered to be the object of an operation is begun to be used for vector operation etc, the bank becomes busy for a long period, until completion of the operation for a sequentially addressed succession of data elements from the bank, and as a result elements at other addresses in the same bank can not be used for that long period. All the elements of a vector register are located in one bank unit.

On page 66 of the above-referenced document, a structure having an arrangement of a total of eight vector registers, from V0 to V7, is disclosed. In the existing system, for example, if the instructions, "add the contents of vector registers V0 and V1 and store the result in vector register V2" and "multiply the data obtained as a result of addition, which is stored in the vector register V2, and the contents of vector register V3 and then store the result in vector register V4" are issued, after all the data elements constituting the result of addition are stored in the vector register V2, the content of the pertinent vector register V2 is considered as an object of operation for effecting the succeeding multiplication instruction and the data elements held in V2 are sequentially operated upon. However, since the vector register V2 successively or continuously stores data (elements) obtained as results of addition, it does not become idle until data indicating the final or overall result of addition is stored therein.

Therefore, even when data considered as an object of operation for the succeeding multiplication instruction exists within the vector register V2, the succeeding multiplication instruction cannot use that data until the final or overall result of addition is obtained, except in one particular case in which the succeeding multiplication instructions are issued at a timing such that data obtained as a result of addition in accordance with the preceding addition instruction is being output from an adder circuit. In this case, the succeeding multiplication instructions can be executed in parallel with the execution of the addition instruction by extracting data to be stored into the vector register V2 from the adder circuit by means of a bypass route.

However, it is exceptional for the succeeding instruction to be issued at the timing mentioned above. Instructions are issued at random timing and succeeding instructions are, in general, queued until the operations involved in executing a preceding instruction for the same bank have been terminated.

This brings about the results not only that the average instruction execution time of a vector instruction becomes long but also that the effective degree of use of a vector register can be reduced drastically, and in addition the data to be accommodated in the vector register can also be reduced.

An article by R. M. Owens et al, entitled "On-line algorithms for the design of pipeline architectures", The 6th Annual Symposium on Computer Architecture, April 23—25, 1979, IEEE, Long Beach, pages 12 to 19, discloses an architecture based on the CRAY-1 mentioned above in which variables in the vector registers are kept in skewed form.

According to the present invention there is provided a data processing apparatus, having a plurality of vector registers (VRo to VRm-1), arranged in a plurality of independently accessible memory banks (Bo to B7), consisting each of a plurality of elements (Eo to En-1), provided between a main memory unit and functional units of the apparatus, the apparatus being operable to transfer data to the vector registers from the main memory unit and to hold such transferred data in the vector registers, and operable to carry out various classes of processing, such as logical operations, in the functional units, by sequentially accessing, at successive access timings, elements of the vector registers, whereby each element of each vector register can be assigned a number (o to n-1) corresponding to its position in a sequence of access to the elements of the register, characterised in that successions of elements (Eo to E7, E8 to E15, En-8 to En-1) of each vector register are arranged so that each element of a succession is located in a different memory bank, (e.g. Eo in Bo, E7 in B7) with elements homologously located, i.e. elements assigned similar numbers, in respective different vector registers being arranged in the same memory bank, and that the apparatus includes access start timing control circuitry operable to specify possible access timings for starting sequential access to elements of a vector register for each of the said various classes of processing.

An embodiment of the present invention can provide data processing apparatus in which effective use is made of vector registers and which can simultaneously sequentially process series of data, in parallel continuously, in connection with a plurality of access requests relating to a plurality of logical operators.

Reference is made, by way of example, to the accompanying drawings, in which:—

Figure 1 is a schematic block diagram illustrating the overall structure of data processing apparatus embodying the present invention,

Figure 2 is a block diagram of a principal part of the embodiment of Figure 1,

Figure 3 is a time chart illustrating an adding operation in an embodiment of the present invention,

Figure 4 is a timing chart for assistance in illustrating timings of operations in an embodiment of the present invention,

Figure 5 is a schematic block diagram for assistance in explanation of bank access start timing in an embodiment of the present invention,

Figure 6 is a block diagram illustrating the structure of vector registers in an embodiment of the present invention,

Figure 7 is a block diagram illustrating the structure of the loading processor of the embodiment of the present invention shown in Figure 1,

Figure 8 is a block diagram illustrating the structure of a storing processor of the embodiment of the present invention shown in Figure 1,

Figure 9 is a block diagram illustrating the structure of an adder of the embodiment of the present invention shown in Figure 1,

Figure 10 is a block diagram illustrating the structure of a multiplier of the embodiment of the present invention shown in Figure 1,

Figure 11 is a block diagram illustrating the structure of access start control circuitry employed in an embodiment of the present invention,

Figures 12 (a) and 12(b) are respective block diagrams illustrating structures of write gate circuits of a vector register of an embodiment of the present invention,

Figures 13(a) and 13(b) are respective block diagrams illustrating the structures of read gate circuits of a vector register of an embodiment of the present invention,

Figures 14(a) and 14(b) are respective timing charts illustrating timings of logical operations in an embodiment of the present invention,

Figure 15 is a timing chart for assistance in explanation of the linkage or connection between an adder operation and a multiplier operation in an embodiment of the present invention, and

Figure 16 is a timing chart for assistance in explanation of bank application timing in an embodiment of the present invention.

In Figure 1, 1 is a loading processor; 2 is a storing processor; 3 is an adder; 4 is a multiplier; 20 is a main memory unit MSU; 21 is a main memory control unit MCU; 22 is a memory control unit SU; 23 is a vector register unit VR; 24 is an operation unit EU; and 25 is an instruction control unit IU.

In the apparatus of Figure 1, data in main memory unit MSU can be read by the main memory control unit MCU 21 and input to the loading processor 1, in accordance with an instruction sent from the instruction control unit IU 25. The loading processor 1 loads the content of the read out data into the vector register unit VR 23. Such data stored in the vector register unit VR 23 can be read, and added, for example, by the adder 3 and the result of such addition loaded again into the vector register unit VR 23. The processed (e.g. added) data content of vector register unit VR 23 can be passed through the storing processor 2 and returned to the main memory unit MSU 20 under the control of the main memory control unit MCU 21. The operations of the memory control unit SU 22, vector register unit VR 23 and operation unit EU 24 are respectively controlled by the instruction control unit IU 25.

Figure 2 is a more detailed block diagram mainly illustrating the layout of the vector register unit VR 23.

In Figure 2, items the same as items in Figure 1 are given the same reference numerals.

In Figure 2, 5-0 to 5-7, 6-0 to 6-7, 7, 8 are registers, while 9 to 16 are ports (registers). The vector register memory bank is composed of eight (8) banks B0 to B7, and a total of *m* vector registers VR from $VR_0$ to $VR_{m-1}$, as enclosed within the chain line rectangle in Figure 2, are provided. Each vector register $VR_0$ to $VR_{m-1}$ is divided and arranged between the banks in the direction from bank B0 to B7. The elements $E_0$ to $E_{n-1}$ (where *n* is the number of vector elements in each vector register) in each of the vector registers, $VR_0$ to $VR_{m-1}$, are sequentially interleaved in the direction from the bank B0 to the bank B7. That is, the elements in each vector register are interspersed among the banks B0 to B7, successive elements of the vector register being located in sequence in successive banks in a cyclically repeating fashion. Thus, elements $E_0$ to $E_7$ of each vector register are in banks $B_0$ to $B_7$ respectively, elements $E_8$ to $E_{15}$ are in banks $B_0$ to $B_7$ respectively, and so on, elements $E_{n-8}$ to $E_{n-1}$ being in banks B0 to B7 respectively.

Thereby, elements $E_0$, $E_8$ . . . $E_{n-8}$ of each of the vector registers $VR_0$ to $VR_{m-1}$ are arranged in the bank B0, while elements $E_1$, $E_9$ . . ., $E_{n-7}$ of each of the vector registers are arranged in bank B1. In the same way, elements $E_7$, $E_{15}$ . . ., $E_{n-1}$ of each vector register are arranged in bank B7. Thus, elements of the same number but in respective different vector registers are arranged in the same bank.

In the illustrated embodiment, four processing units of different kinds, the loading processor 1, the storing processor 2, the adder 3 and the multiplier 4, make access to the vector register unit VR23.

Figure 6 illustrates in detail the structure of the vector register unit VR 23 in relation to bank (B)0 and bank (B)1. In Figure 1, 26-1 and 26-2 are vector number registers; 27-1 and 27-2 are element number registers; and 28-1 and 28-2 are address decoding circuits. Each element of a vector register can hold 64 bits, and each vector register is composed of 256 elements. A total of 32 vector registers are used. The final element $E_{255}$ of each vector register is stored in bank (B)7 which is not illustrated in Figure 6.

Figure 7 illustrates in detail the structure of the loading processor 1. In Figure 7, 29-1 to 29-4 are registers; 30 is a shift circuit; 31 is a merge circuit; and 32 is a buffer circuit.

Figure 8 illustrates in detail the structure of the storing processor 2. In Figure 8, 33-1 to 33-4 are registers; 34 is a buffer circuit; 35 is a shift circuit; and 36 is a merge circuit.

Figure 9 illustrates in detail the structure of adder 3. In Figure 9, 37-1 to 37-10 are registers; 38-1 to 38-3 are decoders; 39-1 and 39-2 are pre-shift circuits; 40 is an adder circuit; 41 is a post-shift circuit; and 42 is an off-set circuit.

Figure 10 illustrates in detail the structure of multiplier 4. In Figure 10, 43-1 to 43-14 are registers; 44-1 and 44-2 are decoders; 45-1 and 45-2 are multiplier circuits; 46 is an adder circuit; 47 is a shift circuit; and 48 is an off-set circuit.

In Figure 7 to 10, the reference numerals assigned to input lines at the tops of those Figures and the reference numerals assigned to the output lines at the bottoms of those Figures indicate the items in Figures 1 and 2 from which inputs are received and to which outputs are sent.

Because the general forms of the circuit structures shown in Figures 7 to 10 are known, although the particular structures shown are modified for use with the apparatus, operational description thereof will be omitted.

It should be noted that all processing portions shown in Figures 7 to 10 employ a pipeline structure.

Addition instruction processing in the illustrated embodiment of the present invetion will now be explained with reference to the time chart of Figure 3.

If addition is executed, for example, in each of 11 processing stages (L0 to L10), the elements $E_0$, $E_1$, $E_2$, . . ., $E_{10}$, . . . of a designated vector register are read sequentially as an operand, since a pipeline structure is employed. Here, one input to the adder is considered to be the second operand, whilst the other input to the adder is considered to be the third operand, and the adder output is considered to be the first operand. As an example there will be considered a case in which operations are executed when vector register VR0 provides the second operand, whilst vector register VR1 provides the third operand and vector register VR2 receives the first operand, namely operations for VR2←VR0+VR1.

In Figure 3, when readout operation starts at a certain timing $T_0$, the elements $E_0$ of bank B0 of the second operand vector register VRo is sent to the port 10. At a next timing $T_1$, the element $E_1$ of B1 of the second operand vector register VR0 is sent to the port 10 and simultaneously the element $E_0$ of bank B0 of the third operand vector register VR1 is sent to the port 11. At the timing $T_1$, the element $E_0$ of VR0, held at the port 10 before the time $T_1$, is shifted to the register 7. Thereby, readiness for addition of elements $E_0$ of VR0 and VR1 is achieved. The elements $E_0$ are input to the adder 3. Moreover, at the timing $T_2$, the element $E_2$ of bank B2 of VR0 is sent to the port 10 and simultaneously the element $E_1$ of the bank B1 of VR1 is sent to the port 11. Thereafter, at timings $T_3$ to $T_{10}$, readout processing is sequentially carried out in the same way for succeeding elements. At timing $T_{10}$, the element $E_{10}$ of bank B2 of VR0 is sent to the port 10 and the element $E_9$ of bank B1 of VR1 is sent to the port 11. On the other hand, at timing $T_{10}$ the result of addition of element $E_0$ of VR0 and the element $E_0$ of VR1 is written into the element $E_0$ of bank B0 of the first operand vector register VR2 by the port 9. After timing $T_{10}$, results of addition are output continuously (successively) and sequentially written into corresponding element positions of VR2.

In an embodiment of the present invention, when processing is carried out as explained above, processing by multiplier 4 cannot be started at least during the period from $T_0$ to $T_2$ if the processing of adder 3 is started at $T_0$, but can be started thereafter without awaiting total completion of addition. To achieve this end, a control circuit which controls banks already in use and selects banks to be used by succeeding instructions is provided.

With reference to Figure 4, bank access timing control operations effected in an embodiment of the present invention may be explained in the following terms. In an embodiment of the present invention the names A to H are given to the timings ($T_0$ to $T_7$, $T_8$ to $T_{15}$, $T_{16}$ to $T_{23}$ . . .) divided for the number of operands required, in other words 8 (3 for the adder, 3 for the multiplier, 1 for the loading processor and 1 for the storing processor) in the illustrated embodiment, with a view to solving the problem of bank control, and as indicated below timing for starting application application of processors for each access is specified for each 8-cycle.

Thus, in an embodiment of the present invention, a succession of timings, e.g. $T_0$ to $T_{21}$ as illustrated in Figure 4, is taken to be divided into successive cycles, each cycle comprising eight timings A to H. In Figure 4, timings $T_0$, $T_8$, $T_{16}$ correspond to timings A in successive cycles, $T_1$, $T_9$ and $T_{17}$ correspond to timings B in successive cycles, and timings $T_7$, $T_{15}$ correspond to timings H in successive cycles.

The number of timings in a cycle, eight in this example, is related, in this example, to the number of operands which can be required by processing operations involving the vector register. In this example, three operands are required for addition, three operands are required for multiplication, one operand is required for loading, and one operand is required for storing a total of eight operands.

Timing instants A to H in each cycle are then used to specify (possible) start timings for access to the vector registers in respect of operands required by processing operations (i.e. addition, multiplication, loading, storing) as follows:—

(1) At timing A, access to one input (second operand) of the adder 3 or multiplier 4 can be started,

(2) At timing B, access to the other input (third operand) on the adder 3 or multiplier 4 can be started,

(3) At timing C, access to the output (first operand) of the adder 3 or multiplier 4 can be started.

(4) At timing D, access to one input (second operand) of the multiplier 4 or adder 3 can be started.

(5) At timing E, access to the other input (third operand) of the multiplier 4 or adder 3 can be started.

(6) At timing F, access to the output (first operand) of the multiplier 4 or adder 3 can be started.

(7) At timing G, access to the operand of the loading processor 1 (or storing processor 2) can be started.

(8) At timing H, access to the operand of the storing processor 2 (or loading processor 1) can be started.

The above designation of timings is given only by way of example and other timing arrangements in which consideration is given to the avoidance of simultaneous accesses can be used.

In the above example, timings A, B, C thus become the timings for starting access for addition or multiplication over each eight timing cycle, whilst timings D, E and F become the timings for starting access for multiplication or addition, respectively.

Figure 5 is a block diagram for assistance in explanation of the concept of bank access start timing as mentioned above. In Figure 5, A to H are flip-flops which together constitute a shift register; and "ADD/MULTIPLY START", "LOAD/STORE START" are START signal generator circuits which will be explained later in detail in relation to Figure 11.

Figure 11 illustrates in detail the structure of an access start control circuit employed in an embodiment of the present invention for controlling access to the vector registers. In Figure 11, 50 to 57 are flip-flops A to H for generating timing signals (the flip-flops correspond in number to the memory banks B0 to B7); 58 is a selection circuit; 59 is an ADD/MULTIPLY start control circuit; 60 is a LOAD/STORE start control circuit, 61 is a bank slot reserve control circuit; 62 to 65 are flip-flops; 66 is an invertor; 67 to 71 are OR gates; 72 to 91 are AND gates; 92 is an ADD instruction signal line; 93 is a MULTIPLY instruction signal line; 94 is a LOAD instruction signal line; 95 is a STORE instruction signal line; 96 is an ADD start signal line; 97 is a MULTIPLY start signal line; 98 is a LOAD start signal line; 99 is a STORE start signal line; 100 is a timing flip-flop set signal line.

Operations of the circuit shown in Figure 11 are explained below.

In an initial condition, the timing flip-flop set signal line SET 100 takes a "1" level, the flip-flop A 50 is set and other flip-flops B to H 51 to 57 are reset. Thereafter, the timing flip-flop set signal line SET 100 takes a "0" level, causing only one flip-flop from amongst flip-flops A to H to become "1". Thus, flip-flops A to H start operation as a shift register.

When an instruction for accessing a vector register is issued under these conditions, the instruction is selected by the selector circuit 58 and then input to the appropriate one of the START CONTROL circuits.

When an ADD instruction is selected, one input of AND gate 82 becomes "1". On the other hand, the flip-flops 62 to 65 in the bank slot reserve control circuit 61 are reset under the initial conditions. As a result, when, for example, the flip-flop A50 from amongst the flip-flop group which is operating as a shift register becomes "1", an output of AND gate 80 becomes "1" and the other input of AND gate 82 becomes "1" via the OR gate 68. Therefore, at this time, an output of AND gate 82 becomes "1", the ADD START signal line 96 becomes "1", and start of access to the vector register by means of the selected ADD instruction is allowed. Simultaneously, since an output of AND gate 84 becomes "1", the flip-flop 62 is set and its $\bar{Q}$ output becomes "0". For this reason, the output of AND gate 80 remains as "0", thereafter, even after the flip-flop A50 becomes "1" (even if the flip-flop A50 becomes "1" again) and start of access to the vector register by means of another instruction at the timing A is not allowed.

If the flip-flop D53 becomes "1" before the flip-flop A50, after the ADD instruction is selected, the output of AND gate 81 becomes "1", the ADD START signal line 96 becomes "1", as is the case when flip-flop A becomes "1" first, and start of access to the vector register by means of the selected ADD instruction is allowed. In this case, the flip-flop 63 is set and its output $\bar{Q}$ becomes "0". Thereafter, the output of AND gate 81 remains "0" even when the flip-flop D53 becomes "1" (even if the flip-flop D53 becomes "1" again) and start of access to the vector register by means of another instruction at the timing D is not allowed.

The above operations are carried out when the ADD instruction is selected, and the same operations are also carried out when the MULTIPLY instruction is selected.

If the LOAD instruction is selected, one input of AND gate 90 becomes "1". Thereafter, whichever of the conditions (1) the flip-flop 64 is reset and the flip-flop G becomes "1" or (2) the flip-flop 65 is reset and the flip-flop H becomes "1", occurs first; when that condition occurs the output of AND gate 90 becomes "1". Thereby, the LOAD START signal line 98 becomes "1" and start of access to the vector register by means of the selected LOAD instruction is allowed. Simultaneously, the flip-flop 64 or 65 which has caused the output of AND gate 90 to become "1" is set, and start of access to the vector register by means of another instruction at the timing corresponding to the pertinent flip-flop is not allowed.

The operations are carried out when a STORE instruction is selected are the same as those carried out when a LOAD instruction is selected.

The processing of an instruction for making access to the vector register is executed as explained above but when processing in relation to the pertinent instruction has been completed the corresponding flip-flop in the bank slot reserve control circuit 61 is reset at this timing. Thereafter, access start processing to the vector register can be effected again at the same timing by another instruction.

Figures 14(a) and 14(b) illustrate the timings of exemplary logical operations.

Figure 14(a) illustrates a case in which a preceding ADD instruction operation is started at a timing A and a succeeding ADD instruction operation is also started at a timing A. In this case, timing D (after the first timing A) is already occupied by another logical operation, namely by a multiplication instruction operation, which is not illustrated, and the timing D at $T_3$ cannot be used for access start for the succeeding ADD.

Figure 14(b) illustrates a case in which a preceding ADD instruction operation is started at a timing A and a succeeding ADD instruction operation is started at the first available idle timing, namely at timing D.

Figure 15 illustrates an example of linkage or connection between addition and multiplication. Namely, first, the addition of vector registers VR1 and VR2 is carried out and the result is stored in vector register VR3. Then, multiplication between VR3, storing the result of addition, and another register VR4, is carried out, and the result is stored in vector register VR5.

In the example of Figure 15, the preceding addition is started at a timing A and the succeeding multiplication is started at a timing D. The first results of addition begin to be stored in VR3 at timing C, and therefore the succeeding multiplication can be started immediately with a delay of only one timing.

Figure 16 explains the bank application timing, illustrating variation of bank access timing, in relation to an addition VR3←VR1+VR2.

The conditions in which only three banks are occupied simultaneously, at the same timing, after timing C of the second A—H cycle—that is after the start of output of the operation result for VR3←VR1+VR2, will be clear from Figure 16. Therefore, it will be understood that, in a succeeding multiplication, the preceding addition and bank access can be executed smoothly without collision by starting bank access for the succeeding multiplication from the timing D of the second cycle.

Figures 12(a) and 12(b) illustrate write gate circuit structures for a vector register. Figure 12(a) illustrates a gate circuit for a 0th bit whilst Figure 12(b) illustrates a gate circuit for a 1st bit. The gate circuits for the 2nd to 63rd bits are not shown.

In Figures 12(a) and 12(b), 5-0 to 5-7, 9, 15, 16 indicate outputs to, or inputs from, items having those reference numbers in Figure 2, and the suffix 0 indicates that the 0th bit (of the outputs and inputs) is taken, whilst suffix 1 indicates that the 1st bit (of the outputs and inputs) is taken.

ADD1 to ADD3, LD1 to LD3, MULTI1 to MULTI3, SEL1A to SEL1H, SEL2A to SEL2H, SEL3A to SEL3H indicate respective gate control signals.

Figures 13(a) and (13b) illustrate gate circuit structures for reading data from a vector register. Figure 13(a) illustrates a gate circuit for a 0th bit, whilst Figure 13(b) illustrates a gate circuit for a 1st bit. The gate circuits for the 2nd to 63rd bits are omitted.

In Figures 13(a), and 13(b), 6-0 to 6-7, 10 to 14 indicate outputs to, or inputs from, items having those reference numbers in Figure 2, and the suffix 0 indicates that the 0th bit (of the outputs and inputs) is taken, whilst the suffix 1 indicates that the 1st bit is taken.

G1A to G1H, . . . G5A to G5H, ADD11 to ADD51, ADD12 to ADD52, . . ., ST1 to ST5 respectively indicate gate control circuits.

The circuit operation of the gate circuits shown in Figures 12 and 13 will be readily understood and therefore operating description will be omitted.

As will be clear from the above explanation, in apparatus embodying the present invention, a linkage operation between different kinds of logical operations using vector registers can be more easily realised, and higher speed instruction operation can be realised, as compared with an existing system. Thereby, in addition, effectiveness with which vector registers are employed can be raised, providing for a highly effective data processing system.

Moreover, apparatus embodying the present invention provides for the effective processing of data sequentially for a plurality of access requests with a simplified circuit structure without a requirement for a complicated control circuit for access timing to vector registers.

In accordance with the present invention as claimed, the succession of vector elements of a vector register are dispersed amongst a plurality of memory banks. Elements which are homologous or similarly located within respective vector registers are found within the same memory bank. An example of the distribution of vector elements amongst memory banks is given.

For example, when there is effected a logical operation, for example, which involves taking and delivering as operands, successions of elements from and to respective vector registers successive elements of each operand are taken from different memory banks.

Timing control circuitry is provided which, having regard to the operation to be effected, controls the start timings of access to the vector registers for the operands. By these means the memory banks involved are not excluded from use in a succeeding operation until one operation has been entirely completed; under control of the timing control circuitry access can be made to a vector register for the purpose of one operation and the purpose of the succeeding operation, whilst the one operation is still being performed. In effect, steps in one operation are interleaved with steps in the succeeding operation at controlled timings.

A data processing system embodying the present invention can have, for example, an adder, a multiplier, a load processor, and a store processor, as processors for making access to the vector registers.

The access start control circuitry of a data processing system embodying the present invention can have, for example, a cyclic shift register made up of flip-flops, equal in number to the memory banks, as timing generation means.

In a data processing system embodying the present invention, a plurality of timings are generated from the timing generation means as vector register access start timings.

In a data processing system embodying the present invention a plurality of common timings may be assigned as vector register access start timings for the adder and multiplier, whilst a further plurality of common timings different from those above, may be assigned as vector register access start timings for the load processor and store processor.

In a data processing system embodying the present invention there may be provided a flip-flop arrangement which indicates the condition (occupied or unoccupied) of a plurality of vector register access start timings, so that only when the flip-flop arrangement indicates an access start ready condition for a pertinent timing is start of access to a memory bank allowed at the pertinent timing.

In a data processing system embodying the present invention the adder and multiplier may be so structured, when one input thereto is considered as a second operand, another input thereto is considered as a third operand, and the output therefrom is considered as a first operand, that each exclusively occupies a certain memory bank during successive or continuous timings for making access to the three operands.

In a data processing system embodying the present invention the adder and multiplier may be so structured, when one input thereto is considered as a second operand, another input thereto is considered as a third operand, and an output therefrom as a first operand, that these circuits occupy three consecutive or adjacent memory banks, for making access to the three operands, at a certain timing.

**Claims**

1. Data processing apparatus, having a plurality of vector registers (VRo to VRm-1), arranged in a plurality of independently accessible memory banks (Bo to B7), consisting each of a plurality of elements (Eo to En-1), provided between a main memory unit (20) and functional units (3, 4) of the apparatus, the apparatus being operable to transfer data to the vector registers from the main memory unit and to hold such transferred data in the vector registers, and operable to carry out various classes of processing, such as logical operations, in the functional units, by sequentially accessing, at successive access timings, elements of the vector registers, whereby each element of each vector register can be assigned a number (0 to n-1) corresponding to its position in a sequence of access to the elements of the register, characterised in that successions of elements (Eo to E7, E8 to E15, En-8 to En-1) of each vector register are arranged so that each element of a succession is located in a different memory bank, (e.g. Eo in Bo, E7 in B7) with elements homologously located, i.e. elements assigned similar numbers, in respective different vector registers being arranged in the same memory bank, and that the apparatus includes access start timing control circuitry operable to specify possible access timings for starting sequential access to elements of a vector register for each of the said various classes of processing.

2. Apparatus as claimed in claim 1, including an adder (3), a multiplier (4), a load processor (1) and a store processor (26) operable to access the vector registers for processing contents thereof.

3. Apparatus as claimed in claim 1 or 2, wherein the access start timing control circuitry comprises a cyclic shift register composed of flip-flops (A to H; 50 to 57) equal in number to the banks of the said plurality of memory banks, as timing generation means.

4. Apparatus as claimed in claim 3, wherein the timing generation means are operable to generate a sequence of vector register possible access start timings.

5. Apparatus as claimed in claim 4, read as appended to claims 2 and 3, wherein a first plurality of timings are specified as possible vector register access start timings in common for the adder and multiplier, and a second plurality of timings, different from the said first plurality of timings, are specified as possible vector register access start timings in common for the load processor and store processor.

6. Apparatus as claimed in claim 4 or 5, wherein the access start timing control circuitry comprises an arrangement of flip-flops (62 to 65) operable to indicate in respect of each possible vector register access start timing whether that timing is occupied or unoccupied, i.e. whether that timing is or is not already in use for accessing, and is operable so that only when the arrangement of flip-flops indicates an access start ready condition, i.e. an unoccupied condition, for a given timing is start of access to a memory bank allowed at that timing.

7. Apparatus as claimed in any one of claims 2 to 6, wherein the adder and multiplier are each so structured that one input thereto is a second operand, another input thereto is a third operand and an output therefrom is a first operand, for processing by the adder or the multiplier, as the case may be, and each is operable to access relevant memory banks, for making access to the three operands, at successive timings.

8. Apparatus as claimed in any one of claims 2 to 6, wherein the adder and multiplier are each so structured that one input thereto is a second operand, another input thereto is a third operand, and an output therefrom is a first operand, for processing by the adder or the multiplier, as the case may be, and each is operable to occupy three consecutive memory banks, i.e. memory banks including respective elements, of respective different vector registers, assigned consecutive numbers, for making access to the three operands, at one timing.

**Patentansprüche**

1. Datenverarbeitungsgerät, mit einer Anzahl von Vektorregistern (VRO bis VRm-1) die in einer Anzahl von unabhängig zugreifbaren Speicherbanken (B0 bis B7) angeordnet sind, die jeweils aus einer Anzahl von Elementen (Eo bis En-1) bestehen, die zwischen einer Hauptspeichereinheit (20) und Funktionseinheiten (34) des Geräts vorgesehen sind, das Daten von der Hauptspeichereinheit zu den Vektorregistern übertragen und solche übertragenen Daten in den Vektorregistern halten kann, und das verschiedene Klassen von Verarbeitungen wie logische Operationen, in den Funktionseinheiten ausführen kann, durch sequentiellen Zugriff, zu sukzessiven Zugriffszeiten, zu Elementen des Vektorregisters, wodurch jedem Element eines jeden Vektorregisters eine Zahl (0 bis n-1) zugeordnet werden kann, die seiner Position in einer Sequenz von Zugriffen zu den Elementen des Registers entspricht, dadurch gekennzeichnet, daß die Folgen von Elementen (E0 bis E7, E8 bis E15, En-8 bis En-1) jedes Vektorregisters so angeordnet sind, daß jedes Element einer Folge in einer anderen Speicherbank angeordnet ist, (z.B. E0 in B0, E7 in B7), wobei homolog angeordnete Elemente, d. h. den Elementen sind ähnliche Zahlen zugeordnet, in jeweils anderen Vektorregistern in derselben Speicherbank angeordnet sind, und daß das Gerät eine Zeitsteuerungsschaltung für den Beginn des Zugriffs umfaßt, die mögliche Zugriffszeiten zum Starten des sequentiellen Zugriffs zu Elementen eines Vektorregisters für jede der genannten verschiedenen Klassen der Verarbeitung spezifizieren kann.

2. Gerät nach Anspruch 1, mit einem Addierwerk (3), einem Multiplizierwerk (4), einem Ladeprozessor (1) und einem Speicherprozessor (26), die zu den Vektorregistern zugreifen können, um deren Inhalt zu verarbeiten.

3. Gerät nach Anspruch 1 oder 2, bei welchem die Steuerschaltung für den Beginn des Zugriffs als Zeitsteuerungserzeugungseinrichtung ein zyklisches Schieberegister umfaßt, das aus Flipflops (A bis H; 50 bis 57) besteht, deren Zahl gleich der Zahl der Banken der genannten Anzahl von Speicherbanken ist.

4. Gerät nach Anspruch 3, bei dem die Zeitsteuerungserzeugungseinrichtung eine Sequenz von möglichen Zugriffsbeginnzeiten zu den Vektorregistern erzeugen kann.

5. Gerät nach Anspruch 4, in Verbindung mit Ansprüchen 2 und 3, bei dem eine erste Anzahl von Zeitpunkten für den möglichen Beginn des Zugriffs zu den Vektorregistern gemeinsam für das Addierwerk und das Multiplizierwerk spezifiziert werden, und daß eine zweite Anzahl von Zeitpunkten, die von der genannten ersten Anzahl von Zeitpunkten verschieden ist, als mögliche Zeiten für den Beginn des Zugriffs zu den Vektorregistern gemeinsam für den Ladeprozessor und den Speicherprozessor spezifiziert werden.

6. Gerät nach Anspruch 4 oder 5, bei dem die Zeitsteuerungsschaltung für den Zugriffsbeginn eine Anordnung aus Flipflops (62 bis 65) umfaßt, die bezüglich des möglichen Zugriffsbeginns zu jedem Vektorregister anzeigen können, ob der Zeitpunkt belegt ist oder nicht, d.h., ob dieser Zeitpunkt schon für den Zugriff verwendt wird oder nicht, und die so arbeiten kann, daß nur dann, wenn die Anordnung von Flipflops einen für den Zugriffsbeginn bereiten Zustand anzeigt, d. h. einen nicht belegten Zustand, für einen vorgegebenen Zeitpunkt der Zugriffsbeginn zu einer Speicherbank zu diesem Zeitpunkt erlaubt wird.

7. Gerät nach einem der Ansprüche 2 bis 6, bei dem Addierwerk und Multiplizierwerk jeweils so aufgebaut sind, daß, für die Verarbeitung durch das Addierwerk oder das Multiplizierwerk, wie es der Fall sein mag, ein Eingang zu ihnen ein zweiter Operand ist, ein anderer Eingang ein dritter Operand ist und ein Ausgang von ihnen ein erster Operand ist, und daß jedes von beiden zu sukzessiven Zeiten zu den relevanten Speicherbanken zugreifen kann, um zu den drei Operanden zuzugreifen.

8. Gerät nach einem der Ansprüche 2 bis 6, bei dem Addierwerk und Multiplizierwerk jeweils so aufgebaut sind, daß für die Verarbeitung durch das Addierwerk oder durch das Multiplizierwerk, wie es der Fall sein mag, ein erster Eingang zu diesem ein zweiter Operand ist, ein anderer Eingang zu diesem ein dritter Operand ist und ein Ausgang von diesem ein erster Operand ist, und jedes drei konsekutive Speicherbanken belegen kann, das heißt Speicherbanken, die entsprechende Elemente von entsprechend verschiedenen Vektorregistern einschließen, denen konsekutive Zahlen zugeordnet sind, um zu einem gesteuerten Zeitpunkt zu den drei Operanden zuzugreifen.

**Revendications**

1. Appareil de traitement de données, possédant plusieurs registres vectoriels (VRO à VRm-1), qui sont disposés en plusieurs modules de mémoire (B0 à B7) indépendamment accessibles, consistant chacun en plusieurs éléments (E0 à En-1), placés entre une unité de mémoire principale (20) et des unités fonctionnelles (3, 4) de l'appareil, l'appareil ayant pour fonction de transférer des données de l'unité de mémoire principale aus registres victoriels et de maintenir les données ainsi transférées dans les registres vectoriels, et ayant pour fonction d'effectuer diverses catégories de traitements, par exemple des opérations logiques, dans les unités fonctionnelles, en faisant séquentiellement accès, à des instants d'accès successifs, à des éléments des registres vectoriels, si bien que chaque élément de chaque registre vectoriel peut se voir attribuer un numéro (0 à n-1) correspondant à sa position dans une séquence d'accès aux éléments du registre, caractérisé en ce que des successions d'éléments (E0 à E7, E8 à E15, En-8 à En-1) de chaque registre vectoriel sont disposées de façon que chaque élément d'une succession est placé dans un module de mémoire différent (par exemple E0 dans B0, E7 dans B7), des éléments placés de manière homologue, à savoir des éléments désignés par des numéros analogues, que appartiennent à des registres vectoriels respectivement différents étant disposés dans le même module de mémoire, et en ce que l'appareil comporte un circuit de commande des instants de début d'accès qui a pour fonction de déterminer des instants d'accès possibles pour faire commencer l'accès séquentiel à des éléments d'un registre vectoriel pour chacune desdites diverses catégories de traitements.

2. Appareil selon la revendication 1, comportant un additionneur (3), un multiplicateur (4), un processeur de charge (1) et une processeur d'emmagasinage (26) pouvant avoir accès aux registres vectoriels en vue de traiter leurs contenus.

3. Appareil selon la revendication 1 ou 2, ou le circuit de commande des instants de début d'accès comprend un registre à décalage cyclique constitué de bascules (A à H; 50 à 57) dont le nombre est égal à celui des modules de mémoire, comme moyen de production d'instants prédéterminés.

4. Appareil selon la revendication 3, où le moyen produisant les instants prédéterminés a pour fonction de produire une série d'instants de début d'accès possibles aux registres vectoriels.

5. Appareil selon la revendication 4, lue en liaison avec les revendications 2 et 3, où une première série d'instants sont désignés comme étant des instants possibles de début d'accès aux registres vectoriels en commun pour l'additionneur et le multiplicateur, et une deuxième série d'instants, qui diffère de ladite première série d'instants, sont désignés comme étant des instants possibles de début d'accès aux registres vectoriels en commun pour le processeur de charge et le processeur d'emmagasinage.

6. Appareil selon la revendication 4 ou 5, où le circuit de commande des instants de début d'accès comprend un ensemble de bascules (62 à 65) ayant pour fonction d'indiquer, relativement à chacun des instants possibles de début d'accès aux registres vectoriels, si cet instant est occupé ou non occupé, c'est-à-dire si cet instant est ou non déjà utilisé comme instant d'accès, et fonctionne de telle manière que ce n'est que lorsque l'ensemble de bascules indique un état prêt pour un début d'accès, c'est-à-dire un état non occupé, pour un instant donné qu'un début d'accès à un module de mémoire est autorisé à cet instant.

7. Appareil selon l'une quelconque des revendications 2 à 6, où l'additionneur et le multiplicateur ont chacun des structures telles qu'un premier signal d'entrée est un deuxième opérande, un autre signal d'entrée est un troisième opérande et un signal de sortie est un premier opérande, pour le traitement par l'additionneur ou le multiplicateur selon le cas, et chacun peut avoir accès à des modules de mémoire appropriés, de façon à faire accès aux trois opérandes, à des instants successifs.

8. Appareil selon l'une quelconque des revendications 2 à 6, où l'additionneur et le multiplicateur ont chacun des structures telles qu'un signal d'entrée est un deuxième opérande, un autre signal d'entrée est un troisième opérande et un signal de sortie est un premier opérande, pour le traitement par l'additionneur ou le multiplicateur selon le cas, et chacun peut occuper trois modules de mémoire consécutifs, à savoir des modules de mémoire comportant des éléments respectifs, dans des registres vectoriels respectivement différents, désignés par des numéros consécutifs, pour faire accès aux trois opérandes, à un certain instant.

Fig. 1

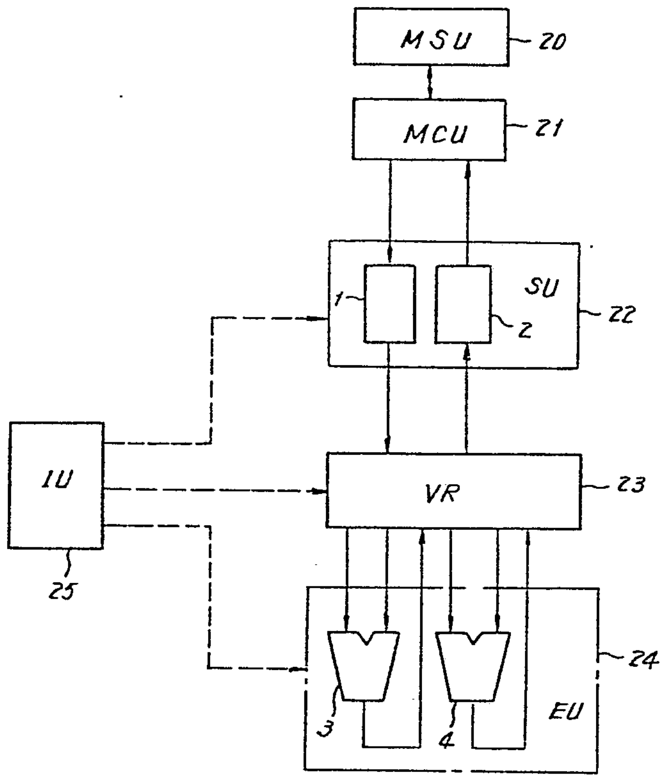

Fig. 2

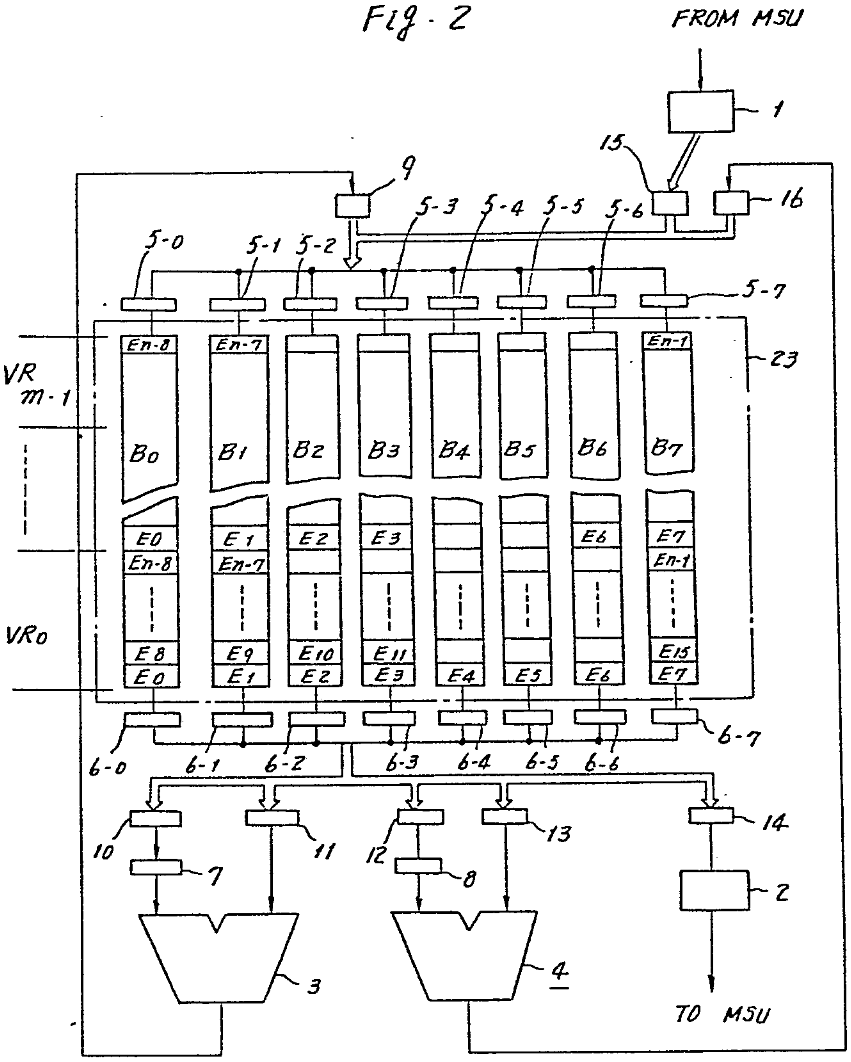
FROM MSU
1
15
16
9
5-0
5-1
5-2
5-3
5-4
5-5
5-6
5-7
23
VR m-1
VR0
B0
B1
B2
B3
B4
B5
B6
B7
En-8
En-7
En-1
E0
E1
E2
E3
E6
E7
E8
E9
E10
E11
E15
E4
E5
6-0
6-1
6-2
6-3
6-4
6-5
6-6
6-7
10
11
12
13
14
7
8
2
3
4
TO MSU

Fig. 3

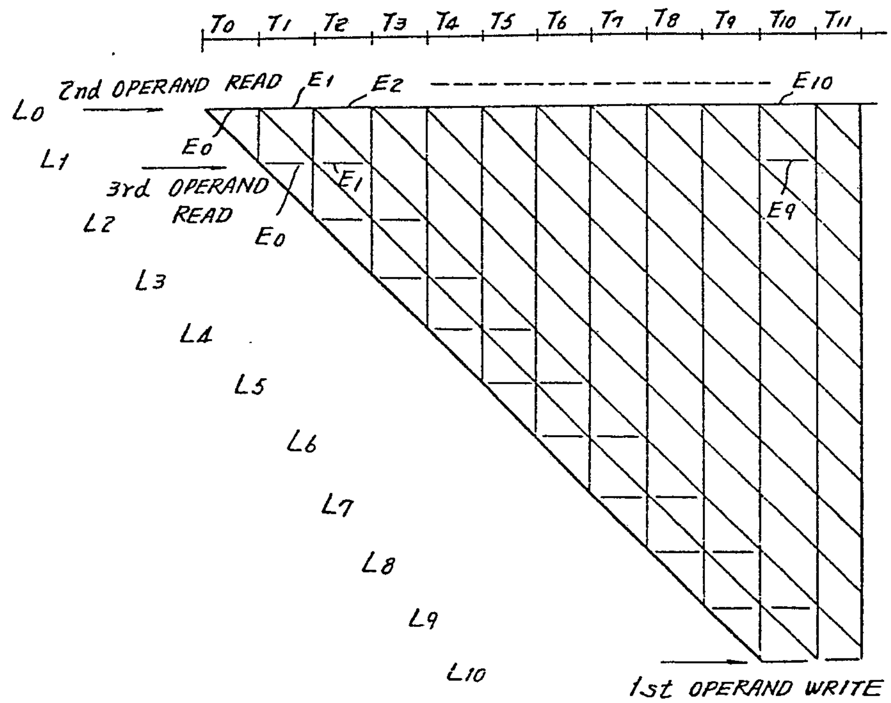
T0
T1
T2
T3
T4
T5
T6
T7
T8
T9
T10
T11
L0
2nd OPERAND READ
E1
E2
E10
E0
L1
3rd OPERAND READ
E1
E9
L2
E0
L3
L4
L5
L6
L7
L8
L9
L10
1st OPERAND WRITE

Fig. 4

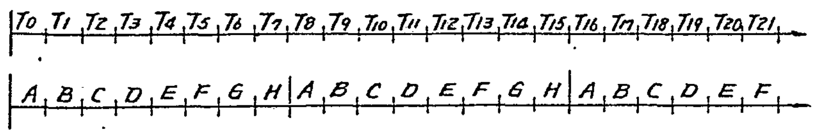
T0 T1 T2 T3 T4 T5 T6 T7 T8 T9 T10 T11 T12 T13 T14 T15 T16 T17 T18 T19 T20 T21
A B C D E F G H A B C D E F G H A B C D E F

Fig. 5

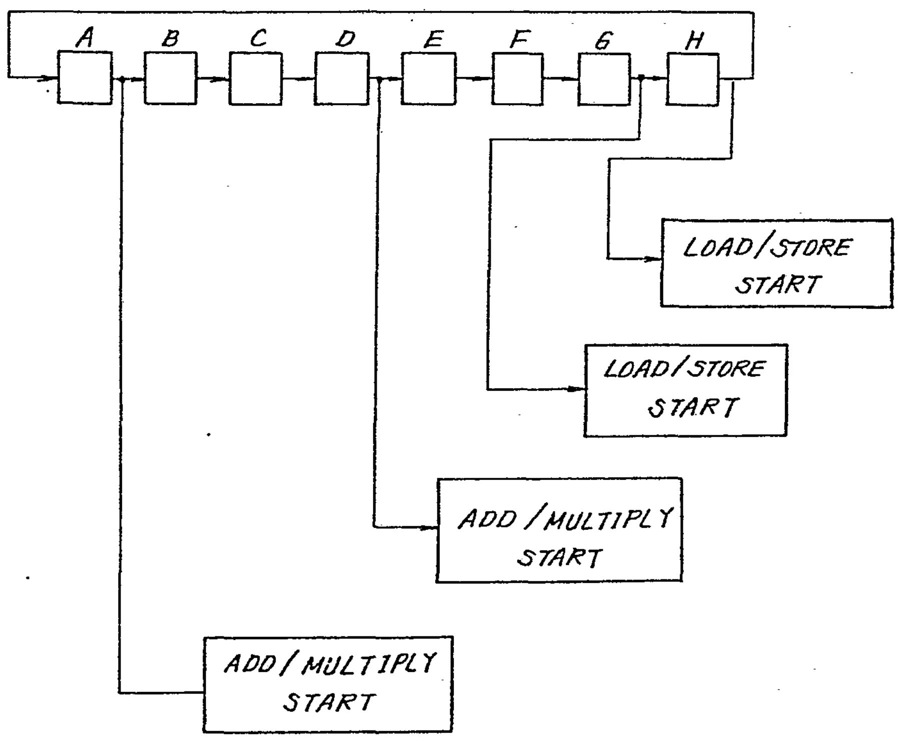
A
B
C
D
E
F
G
H
LOAD/STORE START
LOAD/STORE START
ADD/MULTIPLY START
ADD/MULTIPLY START

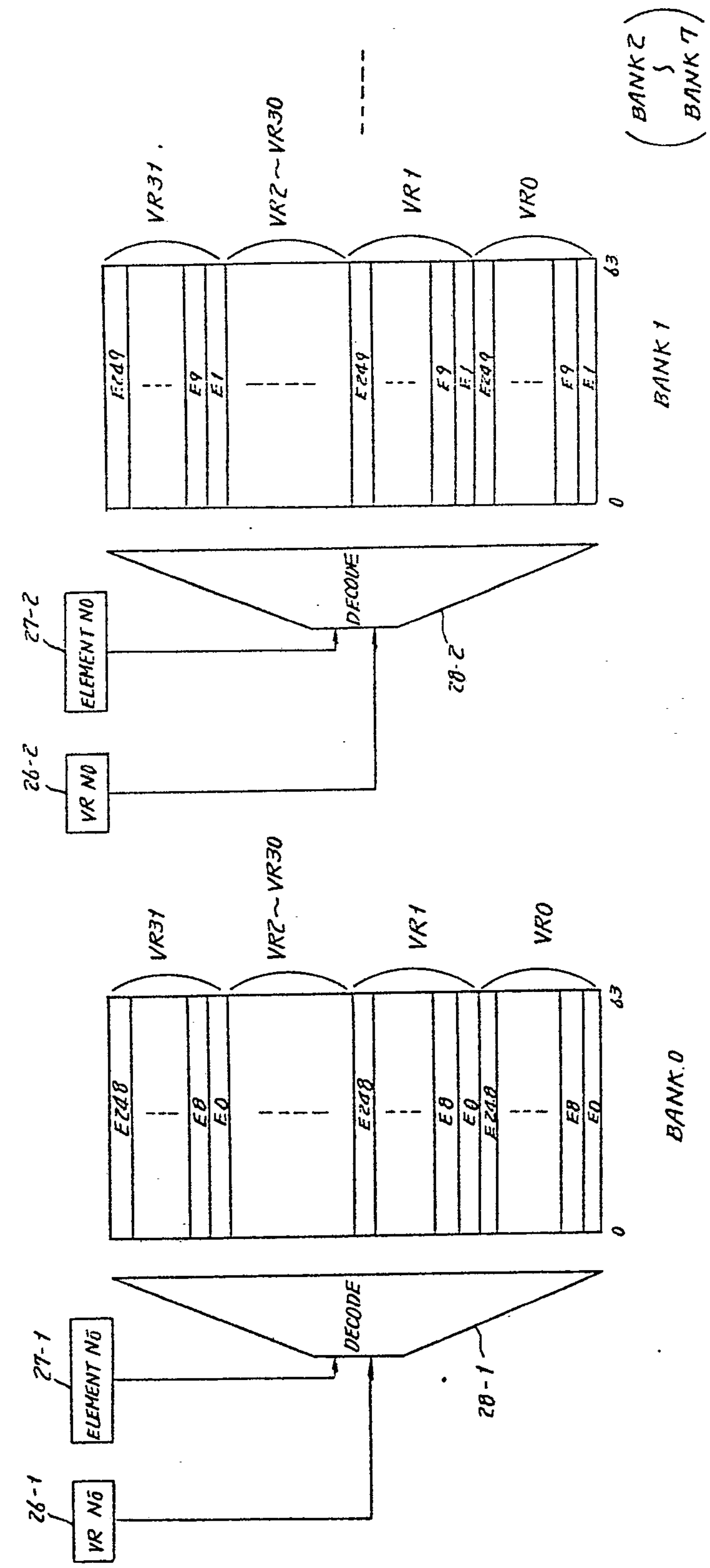
VR NŌ
ELEMENT NŌ
DECODE
26-1
27-1
28-1
E248
E8
E0
VR31
VR2~VR30
VR1
VR0
0
63
BANK.0
VR NO
ELEMENT NO
DECODE
26-2
27-2
28-2
E249
E9
E1
VR31
VR2~VR30
VR1
VR0
0
63
BANK 1
BANK2
~
BANK7

Fig-6

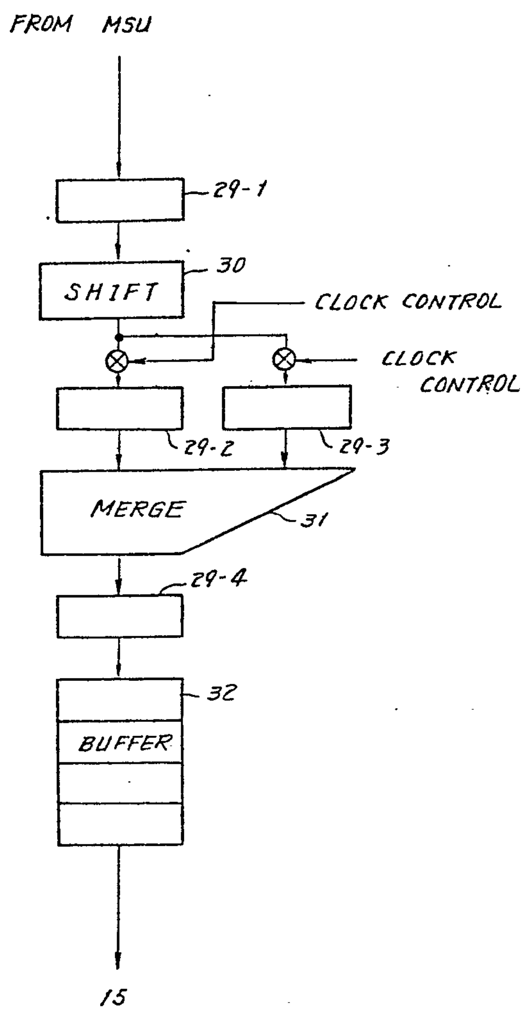
FROM MSU
29-1
SHIFT
30
CLOCK CONTROL
CLOCK
CONTROL
29-2
29-3
MERGE
31
29-4
32
BUFFER
15

Fig. 7

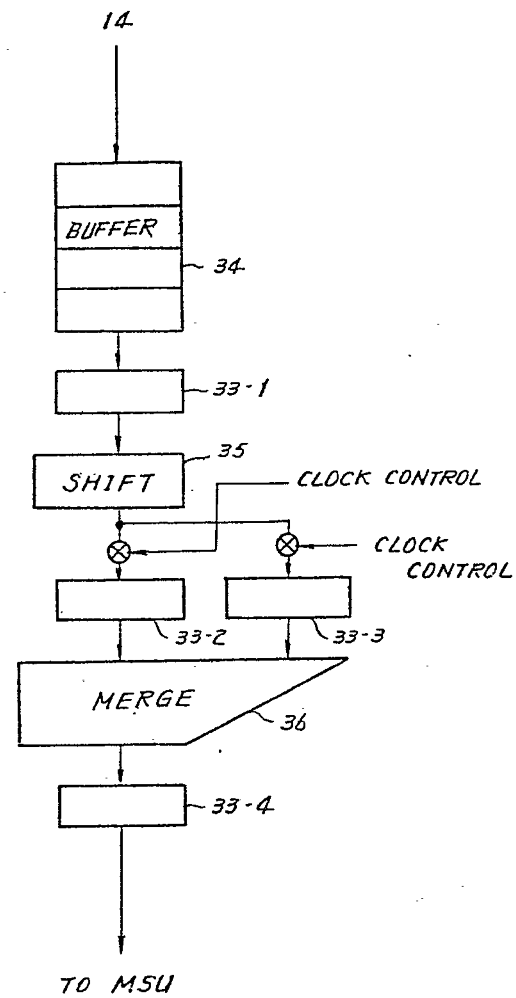
14
BUFFER
34
33-1
SHIFT
35
CLOCK CONTROL
CLOCK
CONTROL
33-2
33-3
MERGE
36
33-4
TO MSU

Fig. 8

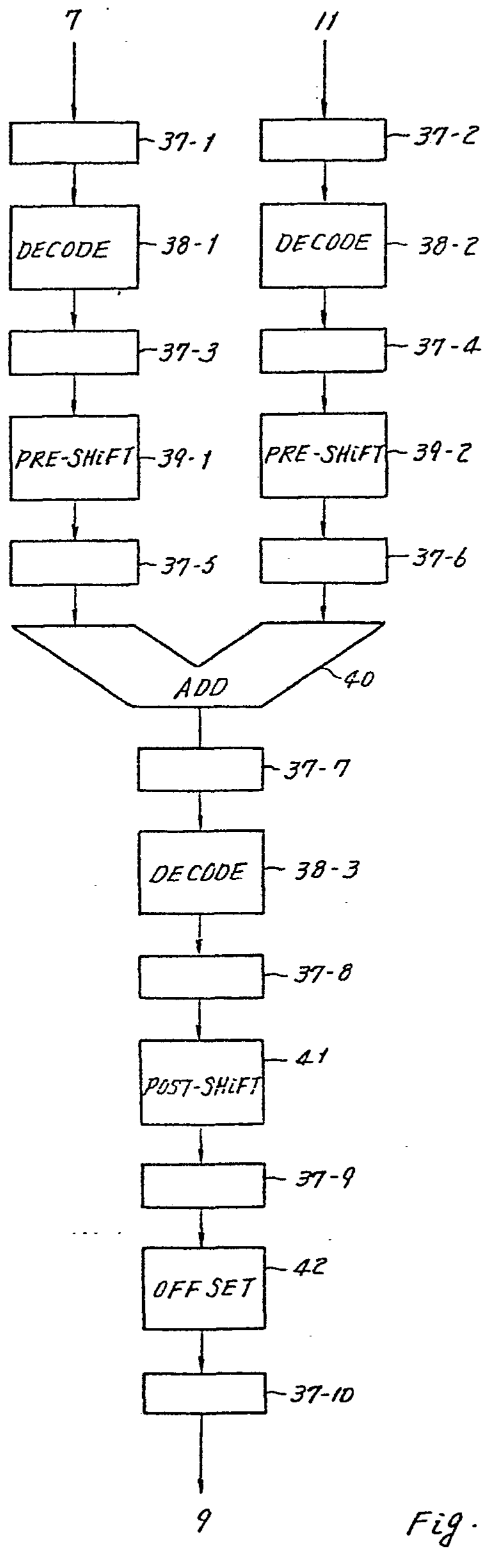
7
11
37-1
37-2
DECODE
38-1
DECODE
38-2
37-3
37-4
PRE-SHIFT
39-1
PRE-SHIFT
39-2
37-5
37-6
ADD
40
37-7
DECODE
38-3
37-8
POST-SHIFT
41
37-9
OFFSET
42
37-10
9

Fig. 9

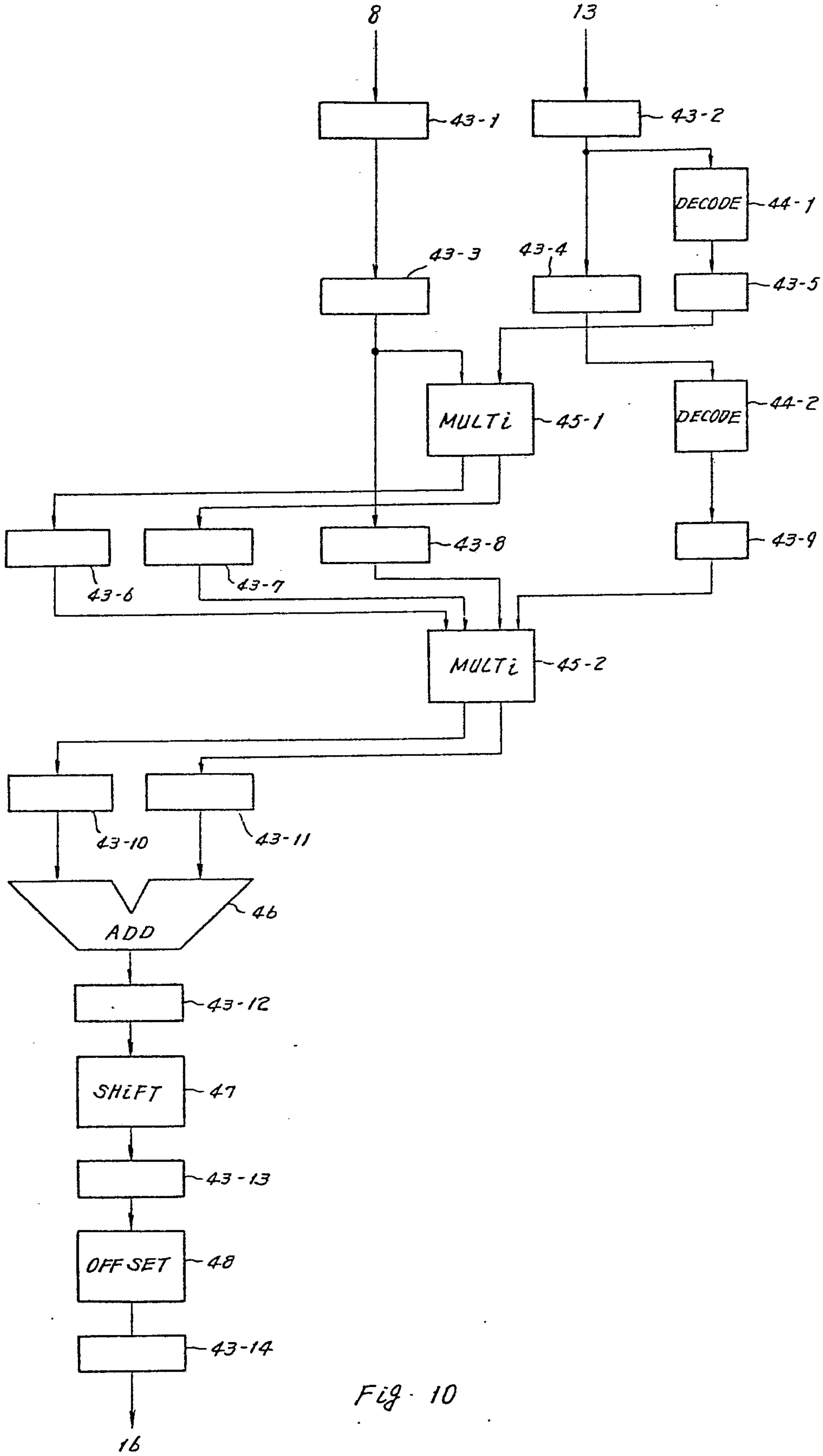
8
13
43-1
43-2
DECODE
44-1
43-3
43-4
43-5
MULTi
45-1
DECODE
44-2
43-8
43-9
43-6
43-7
MULTi
45-2
43-10
43-11
ADD
46
43-12
SHiFT
47
43-13
OFFSET
48
43-14
16

Fig. 10

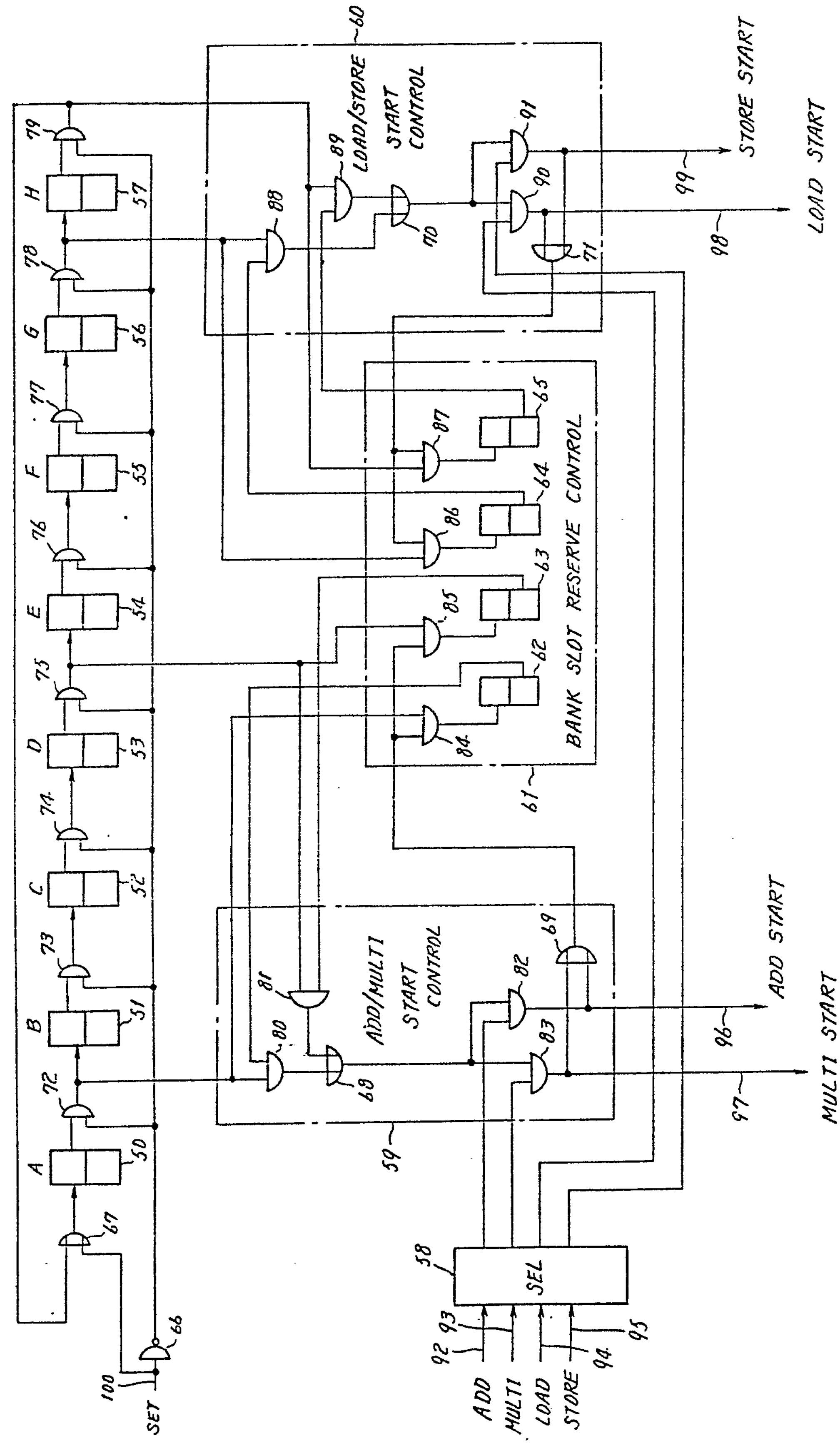
LOAD/STORE START CONTROL
BANK SLOT RESERVE CONTROL
ADD/MULTI START CONTROL
SEL
A
B
C
D
E
F
G
H
SET
ADD
MULTI
LOAD
STORE
STORE START
LOAD START
ADD START
MULTI START
50
51
52
53
54
55
56
57
58
59
60
61
62
63
64
65
66
67
68
69
70
71
72
73
74
75
76
77
78
79
80
81
82
83
84
85
86
87
88
89
90
91
92
93
94
95
96
97
98
99
100

Fig. 11

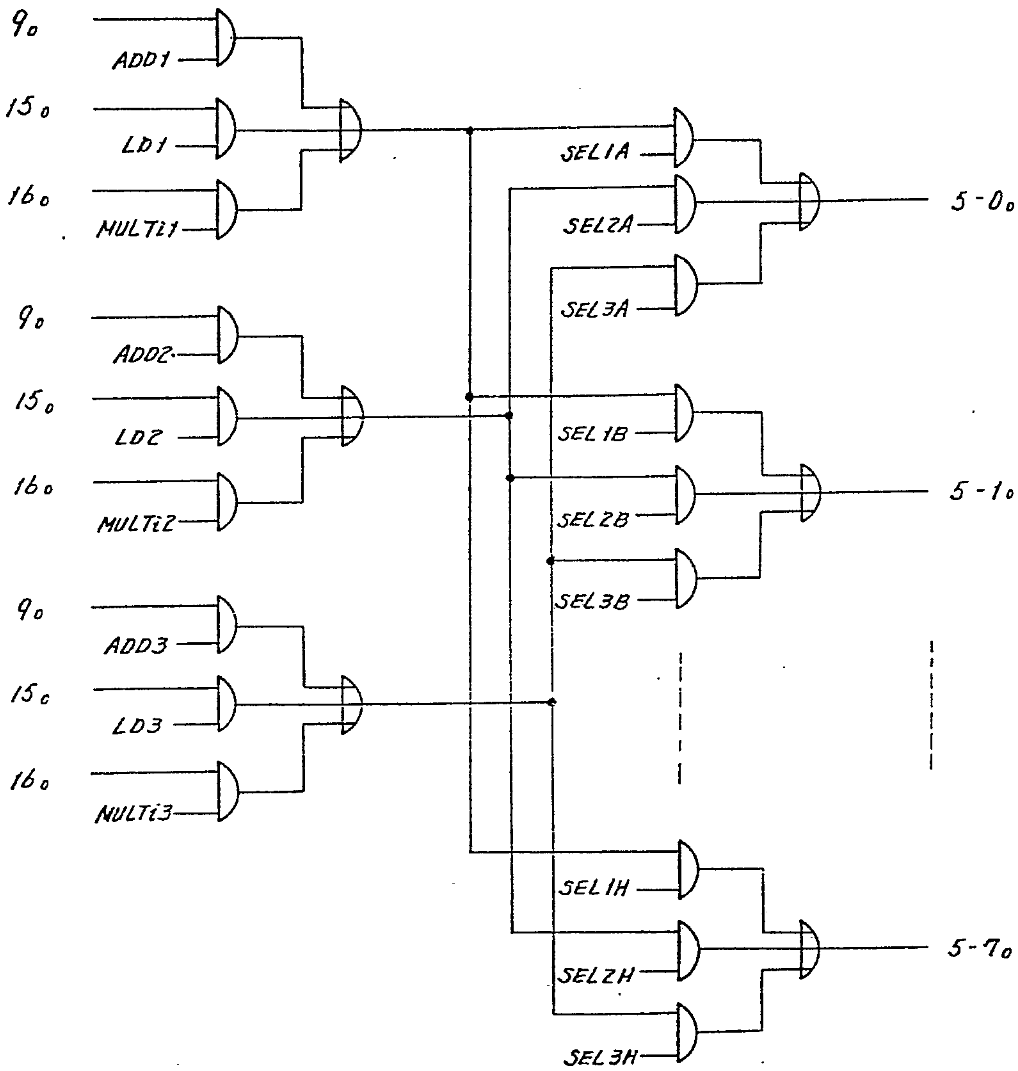
9o
ADD1
15o
LD1
16o
MULTi1
9o
ADD2
15o
LD2
16o
MULTi2
9o
ADD3
15o
LD3
16o
MULTi3
SEL1A
SEL2A
SEL3A
SEL1B
SEL2B
SEL3B
SEL1H
SEL2H
SEL3H
5-0o
5-1o
5-7o

Fig. 12 (a)

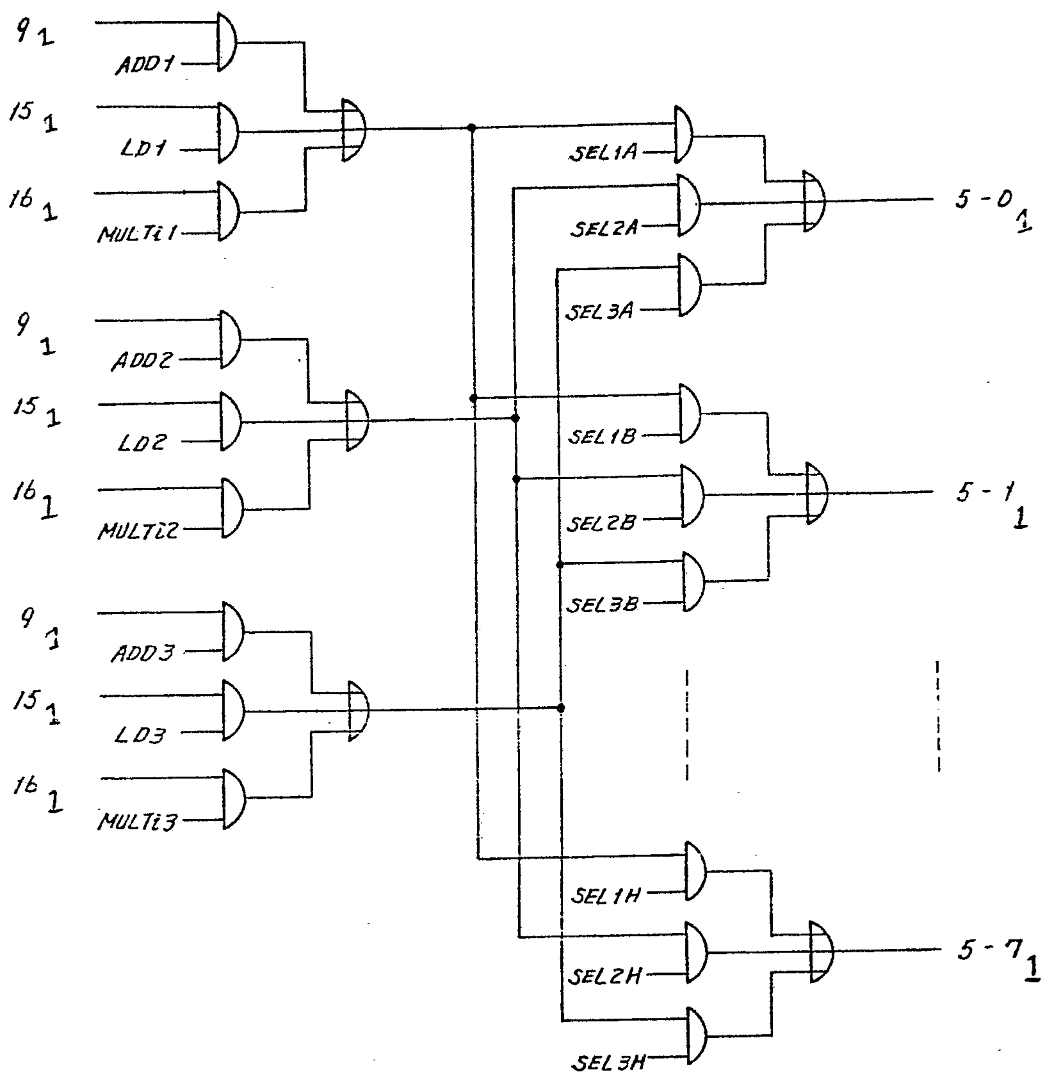

9 1
ADD1
15 1
LD1
16 1
MULTi1
9 1
ADD2
15 1
LD2
16 1
MULTi2
9 1
ADD3
15 1
LD3
16 1
MULTi3
SEL1A
SEL2A
SEL3A
SEL1B
SEL2B
SEL3B
SEL1H
SEL2H
SEL3H
5 - 0 1
5 - 1 1
5 - 7 1


Fig. 12 (b)

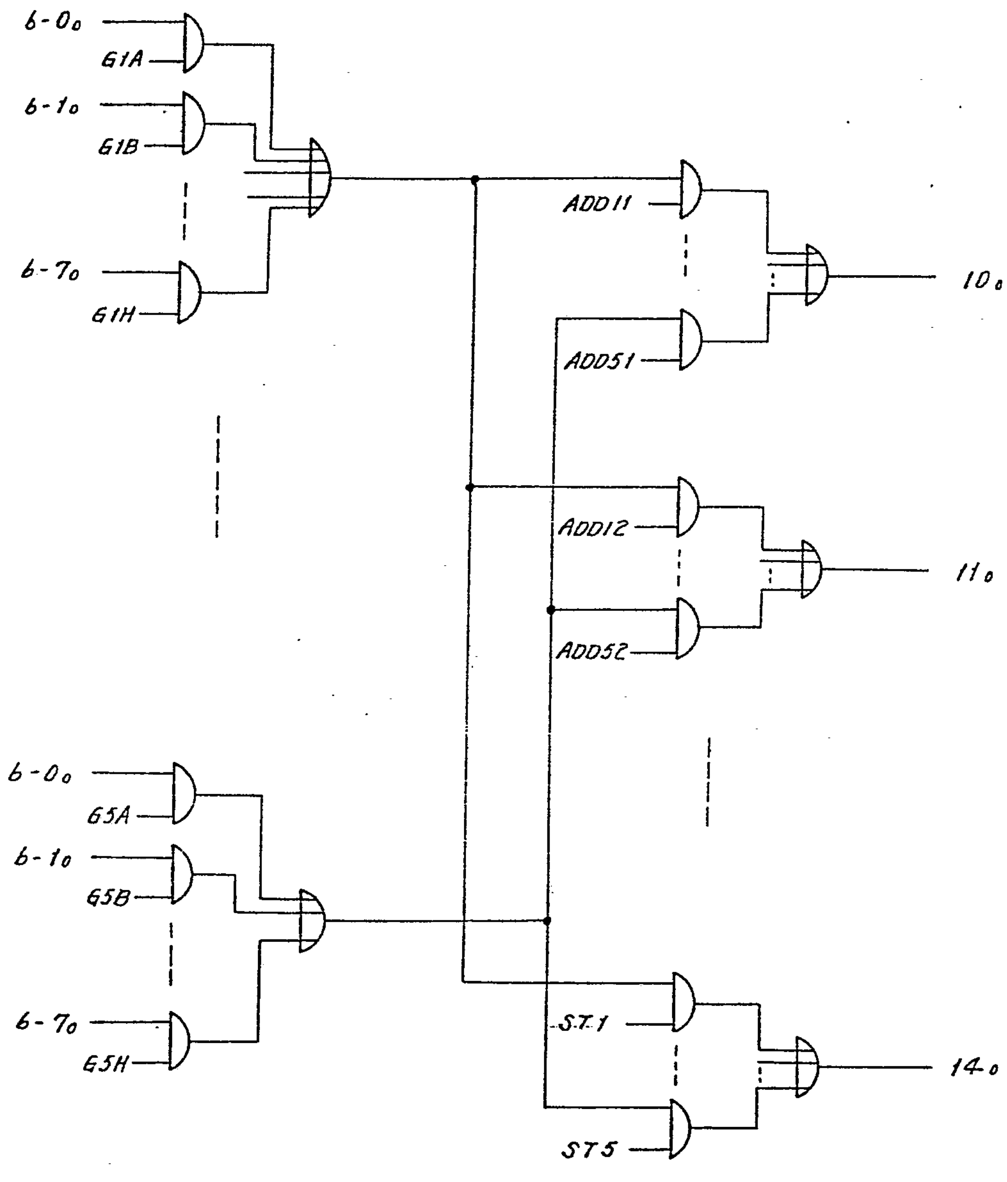
b-0₀
G1A
b-1₀
G1B
b-7₀
G1H
ADD11
ADD51
10₀
ADD12
ADD52
11₀
b-0₀
G5A
b-1₀
G5B
b-7₀
G5H
S.T.1
ST5
14₀

Fig. 13 (a)

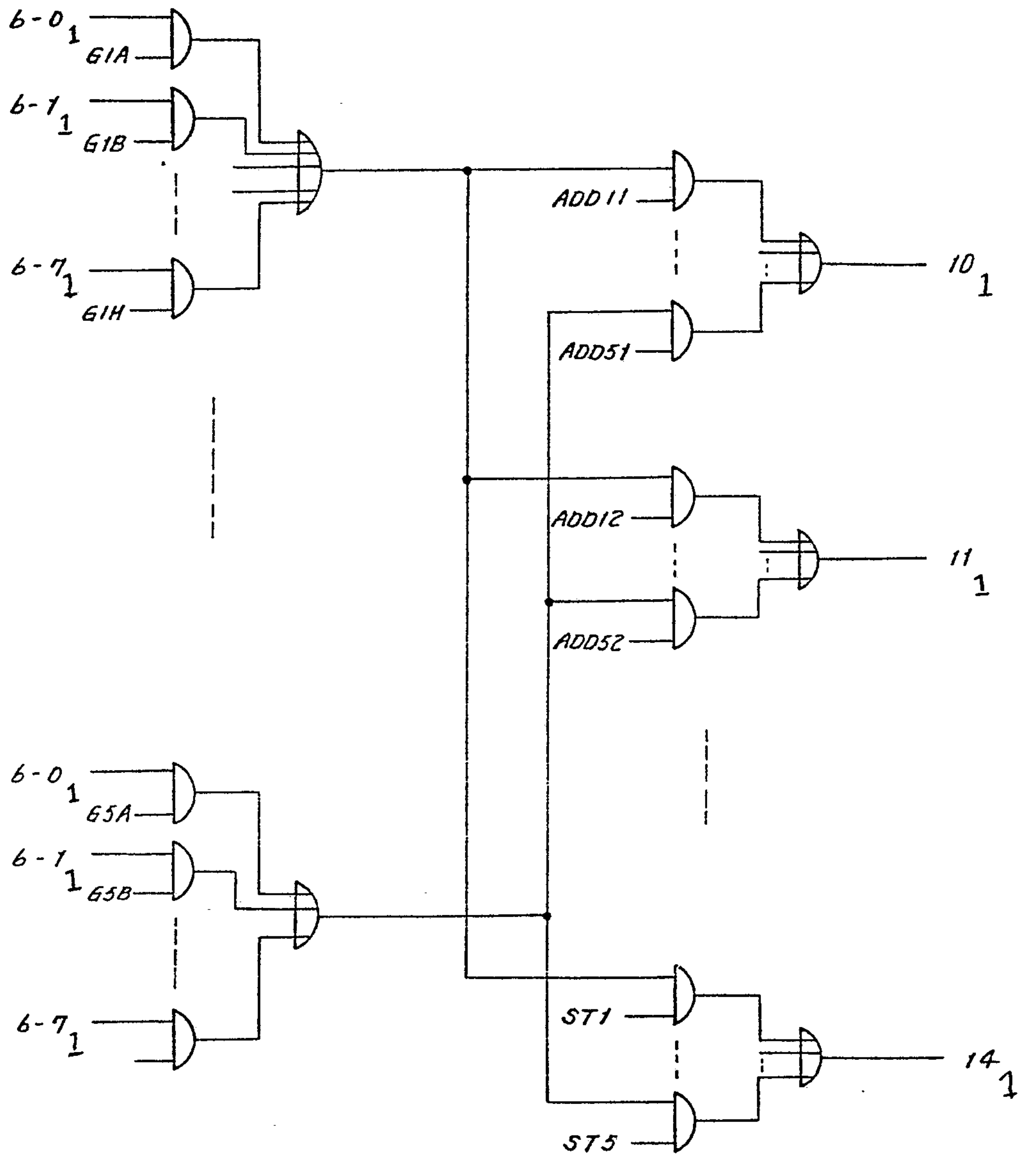
6-0 1
G1A
6-1 1
G1B
6-7 1
G1H
6-0 1
G5A
6-1 1
G5B
6-7 1
ADD11
ADD51
ADD12
ADD52
ST1
ST5
10 1
11 1
14 1

Fig. 13 (b)

Fig. 14 (a)

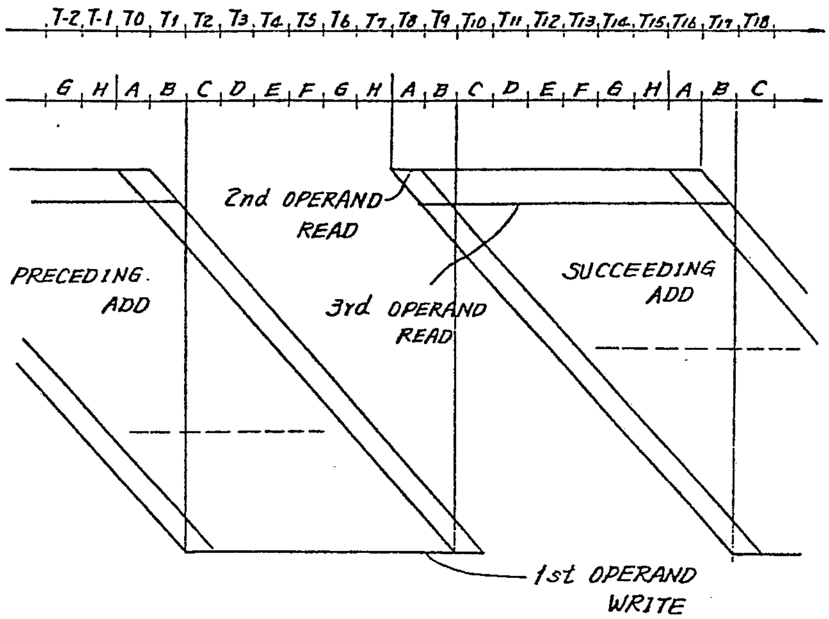


Fig. 14 (b)

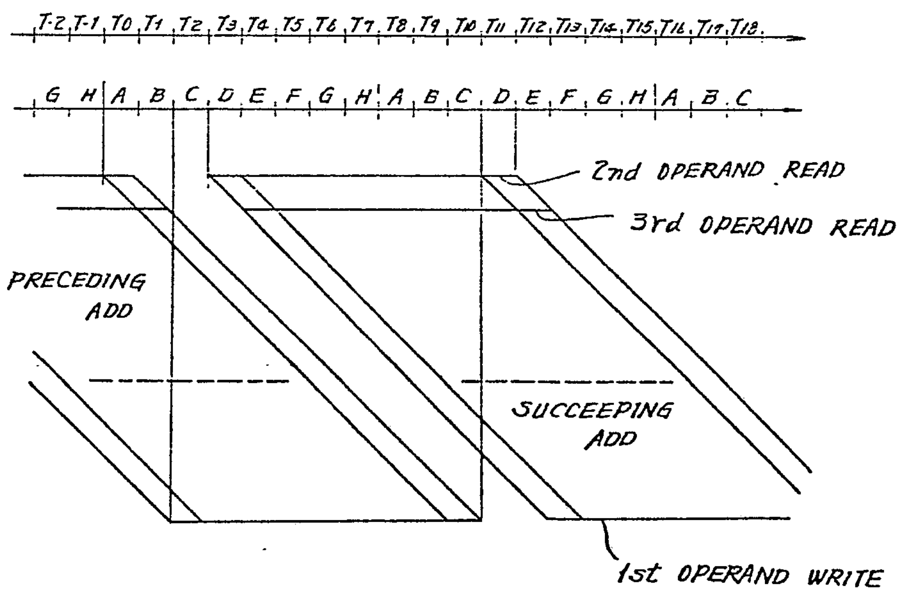

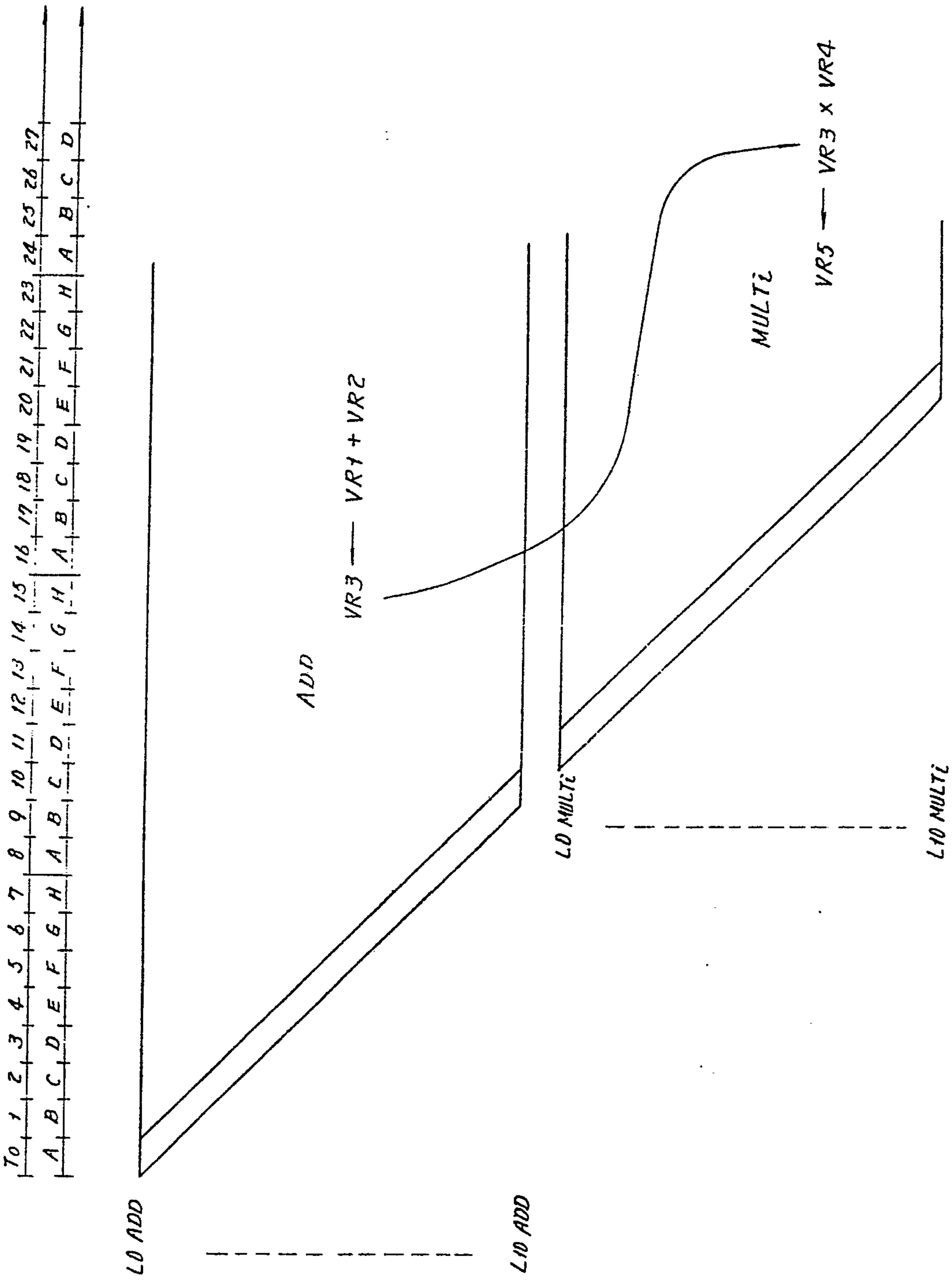
ADD
VR3 — VR1 + VR2
MULTi
VR5 — VR3 x VR4
L0 ADD
L10 ADD
L0 MULTi
L10 MULTi

Fig. 15

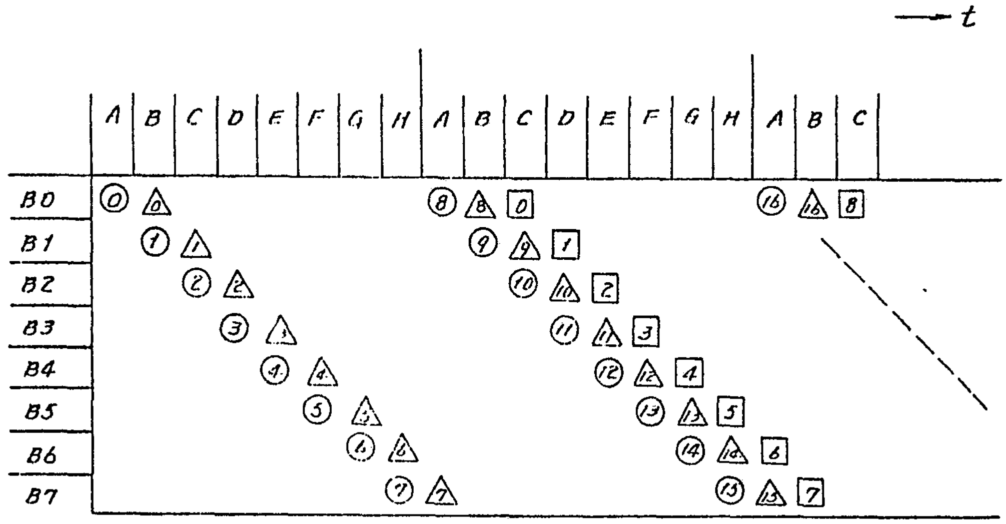


VECTOR ADD

○ : VR1

△ ; VR2

□ ; VR3

VR3 ← VR1 + VR2

Fig. 16